# FASCICULE DE BREVET EUROPEEN

(11) **EP 2 102 298 B1**
(45) Date de publication et mention de la délivrance du brevet: **06.09.2017**
(21) Numéro de dépôt: 07866317.6
(22) Date de dépôt: 24.12.2007
(51) Int. Cl.: C09J 4/06, C09J 153/00, C08F 287/00

(54) **COMPOSITION POUR ADHESIF STRUCTURAL**
ZUSAMMENSETZUNG FÜR STRUKTURELLEN KLEBSTOFF
COMPOSITION FOR STRUCTURAL ADHESIVE

(30) Priorité: 27.12.2006 FR 0611442; 26.07.2007 FR 0705491
(43) Date de publication de la demande: 23.09.2009
(73) Titulaire: Jacret, 95500 Le Thillay (FR)
(72) Inventeur: CURET, Arnaud, F-60300 Fontaine Chaalis (FR); DAVID, Régis, F-92370 Chaville (FR)
(74) Mandataire: Flesselles, Bruno F.G.
(86) Numéro de dépôt international: PCT/EP2007/064532
(87) Numéro de publication internationale: WO 2008/080913

(56) Documents cités:
- EP-A- 1 466 953
- WO-A-2007/075909
- JP-A- 5 163 444
- JP-A- 2002 226 509
- US-A- 4 451 615
- US-A1- 2005 014 901

## Description

La présente invention se rapporte au domaine des adhésifs structuraux acryliques (à base d'acrylate ou de méthacrylate) et à leurs applications.

Les adhésifs structuraux sont une bonne alternative aux autres techniques mécaniques pour lier entre eux deux matériaux, tels les métaux ou les plastiques. En effet, la répartition de force est meilleure par collage que lorsque l'on utilise des techniques alternatives telles que le rivetage ou la soudure. De plus, l'utilisation du collage permet souvent de travailler plus rapidement, et présente également l'avantage de proposer une meilleure isolation contre des éléments externes (poussière, humidité) que les technologies mécaniques.

Les adhésifs structuraux sont ainsi utilisés dans de nombreux domaines industriels, même s'ils présentent certains désavantages. De fait, le lien créé lors de la polymérisation de l'adhésif (prise) est souvent rigide lorsqu'une bonne résistance mécanique est nécessaire. Ainsi, si l'élasticité de l'adhésif est insuffisante, une rupture peut être constatée lorsque les deux pièces liées l'une à l'autres sont amenées à subir des forces les éloignant l'une de l'autre. Il existe des adhésifs présentant une bonne élasticité, mais ils ont souvent une faible résistance mécanique.

Il est donc nécessaire d'identifier des adhésifs structuraux présentant à la fois une bonne résistance mécanique (notamment une résistance au cisaillement) et une élasticité satisfaisante. Par ailleurs, il est important que ces qualités soient observées sur différents types de matériaux, et notamment sur le métal et sur les matériaux composites.

La présente invention se propose de résoudre les problèmes énoncés ci-dessus en fournissant une composition adhésive présentant un allongement à la rupture supérieur ou égal à 70%, de préférence 90%, de façon plus préférée 100 %, ainsi qu'une résistance au cisaillement par la traction supérieure à 15 MPa sur aluminium.

Les adhésifs structuraux sont composés de deux éléments à savoir un élément catalyseur servant à mettre en oeuvre la polymérisation de l'autre élément qui contient des monomères.

L'invention se rapporte ainsi à une composition selon les revendications de 1 à 13 utilisable dans un adhésif structural, comprenant :
(a) au moins un monomère ester méthacrylate
(b) un copolymère bloc élastomérique contenant du styrène et de l'isoprène, ledit composé étant un copolymère bloc styrène - isoprène - styrène (SIS)
(c) au moins un copolymère bloc élastomérique choisi parmi un copolymère bloc styrène-butadiène-styrène (SBS), un copolymère styrène-isoprène-butadiène-styrène (SIBS), un copolymère bloc styrène-éthylène/butylène-styrène (SEBS) ou un copolymère bloc styrène-éthylène/propylène-styrène (SEPS) contenant du styrène et du butadiène ou de l'éthylène
(d) au moins un élastomère choisi dans le groupe constitué des polybutadiène, polyisoprène et polychloroprène.

La composition selon l'invention sera ainsi utilisée avec un catalyseur de polymérisation.

US 4,451,615 décrit des compositions résistantes à la chaleur utilisables en tant qu'adhésif structural, comprenant un monomère ester acrylate et un polymère bloc comprenant de l'isoprène. Ce polymère peut être un homopolymère d'isoprène, un copolymère d'isoprène et d'acrylonitrile ou un SIS.

US 2005/0014901 décrit une composition contenant un monomère méthacrylate ou acrylate d'alkyle, une résine polyester insaturé ou d'ester vinylique, et un polymère ou élastomère totalement ou partiellement thermoplastique.

JP 05-163444 décrit un adhésif contenant un méthacrylate d'alkyle et un copolymère bloc contenant des monomères vinyliques aromatiques et de l'isoprène ou de l'isoprène / butadiène.

JP 2002-226509 décrit un adhésif contenant un monomère acrylate et un copolymère bloc contenant du styrène pouvant notamment être choisi parmi les SBS, SIS, SEBS, SEPS.

EP 1466953 décrit des compositions adhésives contenant du SIS et du SBS, ainsi qu'une résine collante. Cet adhésif ne contient pas de monomère ester méthacrylate, ni d'élastomère.

WO 2007/075909 décrit des compositions comprenant un monomère ester méthacrylate, et un copolymère bloc choisi parmi un copolymère SBS linéaire, un copolymère SBS radial et un plastifiant, un copolymère SIS linéaire ou radial, un copolymère SIBS linéaire ou radial, ainsi que leurs mélanges. La présence d'un élastomère n'est pas envisagée.

Dans un mode de réalisation préféré, le monomère ester (a) est un monomère méthacrylate. On choisit de préférence un monomère méthacrylate dans lequel la partie alcool présente une chaîne linéaire courte (c'est-à-dire ayant un ou deux atomes de carbones). Ainsi, les monomères préférés selon l'invention sont le méthacrylate de méthyle et le méthacrylate d'éthyle.

Dans un autre mode de réalisation, la partie alcool présente au moins un cycle, qui peut être substitué ou non. Ainsi, dans ce mode de réalisation, les monomères peuvent notamment être choisis parmi le méthacrylate de tétrahydrofurfuryle, le méthacrylate de phénoxyéthyle, le méthacrylate d'isobornyle, le méthacrylate de glycidylether, le méthacrylate de benzyle, le méthacrylate de cyclohexyle, le méthacrylate de triméthylcyclohéxyle.

Des mélanges de ces esters peuvent également être utilisés. Le pourcentage en poids de méthacrylate dans la composition est préférentiellement compris entre 20 et 80 %, de façon plus préférée entre 30 à 65 %, de façon encore plus préférée de 42 à 58 % soit environ autour de 50 %.

Dans un mode de réalisation particulier, la composition contient également au moins un monomère ester acrylique (e) dans lequel la partie alcool présente une chaîne linéaire d'au moins 6 atomes de carbones (à chaîne longue). Ainsi, on utilise préférentiellement du méthacrylate de lauryle, du méthacrylate de 2-éthylhexyle, de l'acrylate de 2-éthylhexyle, des esters à base de polyéthylène-glycol, ou des mélanges de ces esters. Il est préférable que la composition contienne au plus 10 %, de façon plus préférée au plus 8%, voire au plus 5% en poids au total de ces monomères acryliques à chaîne longue. Dans un mode de réalisation particulier, la composition comprend un mélange de deux monomères esters acryliques à chaîne longue. De façon préférée, lorsque la composition ne contient qu'un seul monomère ester acrylique (e), il est préféré qu'il soit présent à une quantité inférieure ou égale à 8 % en poids, alors qu'il est acceptable qu'il y en ait à une quantité comprise entre 8 et 10 % lorsque la composition contient un mélange de ces esters (e). Dans ce cas, on préfère que chacun soit au plus présent à 5 %.

La composition peut également contenir d'autres monomères tels que l'acrylonitrile, le méthacrylonitrile, ou le styrène.

La composition selon l'invention comprend également un mélange de différents copolymères bloc. Ainsi, elle comprend un copolymère bloc styrène - isoprène - styrène (SIS) (b) et au moins un copolymère bloc contenant du styrène et du butadiène ou de l'éthylène (c). Lorsqu'il contient du butadiène, ce copolymère bloc peut être un styrène - butadiène - styrène (SBS) ou un copolymère styrène - isoprène - butadiène - styrène (SIBS) tel le Kraton MD6455 (entreprise Kraton Polymers) décrit par Dr. Donn DuBois et al., au congrès Adhesives & Sealants Council Meeting, Louisville, KY, 9-12 octobre 2005.

Lorsqu'il contient de l'éthylène, ce copolymère bloc peut être un SEBS (copolymère styrène-éthylène/butylène-styrène) ou un SEPS (copolymère styrène-éthylène/propylène-styrène). Ces composés sont disponibles dans la gamme Kraton G (Kraton Polymers).

Dans le mode de réalisation préférée de l'invention, le copolymère bloc (c) contient du butadiène.

De manière préférée, le styrène est présent dans une proportion comprise entre 15 et 50 %, de façon plus préférée entre 22 et 40 %, de façon encore plus préférée environ 28-33 % en poids du copolymère SBS. Il est présent dans une proportion comprise entre 12 et 24 %, de manière plus préférée à environ 18-19 % en poids dans les copolymères SIS ou SIBS.

De préférence, la composition contient un mélange d'un SIS et d'un SIBS dans une proportion de variant de 4 : 1 (en poids dans la composition) à 1,5 : 1. La proportion préférée de SIS par rapport au SIBS est d'environ 3 : 1 ou 3,3 : 1. On peut toutefois également utiliser un mélange de SIS et de SBS dans les mêmes proportions relatives que le mélange SIS / SIBS. On peut également utiliser un mélange de SIS, SIBS et SBS. On peut également rajouter un autre copolymère bloc à l'un de ces mélanges.

Les copolymères blocs SIS, SBS ou SIBS utilisables selon l'invention sont bien connus de l'homme du métier. Ils sont notamment produits par l'entreprise Kraton Polymers (Houston, Texas, USA). Ainsi, on peut utiliser le SIS Kraton D1160 décrit dans US 20050238603 ou le Kraton D1161, le SBS Kraton D1102 décrit dans US 5,106,917 et le SIBS Kraton MD6455 ou Kraton MD 6460.

L'homme du métier sait sélectionner les copolymères blocs SIS, SIBS, SBS utilisables dans la composition selon l'invention, parmi ceux existants, en fonction notamment de leur facilité de dissolution dans les monomères utilisés, ou de leur résistance mécanique en traction.

De préférence, la composition selon l'invention comprend entre 10 et 30 % en poids, de préférence entre 15 et 25 %, de façon plus préférée entre 18 et 25 %, du mélange entre ledit copolymère bloc SIS et ledit copolymère bloc contenant du butadiène ou de l'éthylène.

La composition selon l'invention contient également au moins un élastomère choisi de telle sorte qu'il soit compatible en solution avec les copolymères blocs utilisés. Si besoin est, il est fonctionnalisé (présentant une double liaison à ses extrémités, en particulier des fonctions méthacrylate pour améliorer les liaisons avec les monomères). Dans certains cas, on choisit un élastomère liquide. On utilise de préférence au moins un élastomère fonctionnalisé, seul ou en mélange avec au moins un élastomère non-fonctionnalisé. Il est choisi dans le groupe constitué des polybutadiène, polyisoprène et polychloroprène.

Son paramètre de solubilité d'Hildebrand est compatible avec les paramètres de solubilité d'Hildebrand des copolymères blocs utilisés. En particulier, sa valeur ne diffère pas de plus de 10 % de la moyenne des valeurs des paramètres de solubilité d'Hildebrand des copolymères bloc utilisés (par exemple 8,3 (cal.cm⁻³)^{1/2} pour le SIBS MD6455). Le paramètre de solubilité d'Hildebrand est bien connu et se calcule par la racine carrée de la densité d'énergie cohésive du composé. Le paramètre de solubilité d'Hildebrand est directement lié aux forces de dispersion (forces de Van der Waals) qui s'exercent entre les molécules d'une substance chimique. En particulier, le paramètre de solubilité d'Hildebrand (exprimé en cal^{1/2}cm^{-3/2}) de l'élastomère est compris entre 8 et 9 (entre 16 et 19 lorsque l'on exprime les paramètres de solubilité en MPa^{1/2}). On utilise ainsi des élastomères de type polybutadiène (que l'on choisit alors préférentiellement liquide et fonctionnalisé), polyisoprène. On peut également utiliser du polychloroprène (Neoprène AD10, DuPont, USA).

On peut ainsi utiliser un polybutadiène fonctionnalisé tel que le Hycar VTB 2000x168 (terminaisons vinyliques), seul ou en mélange avec un polybutadiène non-fonctionnalisé tel que le Hycar CTB 2000x162 (terminaisons carboxyles) (Emerald Performance Materials (EPM), Cuyahoga Falls, Ohio, USA).

Cet élément (d) est favorablement présent à une quantité comprise entre 4 et 20 % en poids dans la composition selon l'invention, de préférence entre 6 et 15 %, de façon plus préférée entre 8 et 12 %.

Les proportions relatives du mélange copolymères blocs et de l'élastomère sont comprises entre 4 : 1 et 1 : 1 en poids dans la composition, de préférence d'environ 2 : 1.

La composition selon l'invention peut également contenir un monomère acide tel qu'un monomère acide polymérisable par radicaux libres connu dans l'art du type acide carboxylique unsaturé, acide maléique, acide crotonique, acide isophtalique, acide fumarique. On préfère l'acide méthacrylique ou l'acide acrylique.

La composition selon l'invention peut également contenir, dans ses modes de réalisations préférés, au moins un composé supplémentaire choisi parmi un accélérateur de polymérisation, un agent de rhéologie, un promoteur d'adhésion.

L'accélérateur de polymérisation sert à favoriser la polymérisation et le durcissement de l'adhésif lorsque l'on rajoute le catalyseur. Il s'agit d'une amine tertiaire, préférentiellement aromatique, telle que la diméthyl para-toluidine, et/ou le 2,2'-(p-tolylimino)diéthanol.

L'agent de rhéologie sert à garantir une bonne viscosité de la composition selon l'invention, afin qu'elle puisse être aisément appliquée sur les surfaces à coller. On peut utiliser des polyamides telles que le Disparlon 6500 (Kusumoto Chemicals Ltd, Japon).

Le promoteur d'adhésion est notamment un ester de phosphate méthacrylé, tel que l'ester phosphate 2-hydroxyéthyl de méthacrylate (Genorad 40 de Rahn AG, Zürich, Suisse).

D'autres éléments tels que des charges minérales (TiO₂, CaCO₃, Al₂O₃, phosphate de zinc), des agents résistants aux ultraviolets (tels que la 2-hydroxyphenyltriazine, Tinuvin 400 de Ciba-Geigy), de la cire, peuvent également être ajoutés à la composition selon l'invention. Des inhibiteurs de polymérisation à radicaux libres tels que le BHT, ou des benzoquinones comme la naphtoquinone, l'hydroquinone ou l'éthylhydroquinone peuvent aussi être ajoutés pour augmenter la durée de vie de la composition.

Il est connu que les adhésifs structuraux sont formés de deux éléments qui sont une composition selon l'invention et un agent catalyseur permettant la polymérisation et la prise de l'adhésif. Ces deux éléments sont stockés dans deux compartiments différents et sont mélangés lors de l'application de l'adhésif.

Cet agent catalyseur est un initiateur de polymérisation à radicaux libres, en particulier à base de peroxyde, et est bien connu dans l'art. On peut notamment choisir le peroxyde de benzoyle, le tertbutylperoxybenzoate, l'hydroperoxyde de cumène. On préfère lorsque l'agent catalyseur contient entre 5 et 40 % en poids de peroxyde, en particulier environ 20 % en poids de peroxyde. On utilise notamment une pâte contenant environ 20 % de peroxyde de benzoyle.

On utilise l'agent catalyseur dans un ratio de 1 : 1 à 1 : 30, de préférence de 1 : 5 à 1 : 30 de façon encore plus préférée environ 1 : 10 par rapport au second élément qui est la composition selon l'invention.

L'invention est donc basée sur le fait que l'utilisation combinée d'un copolymère bloc élastomérique de type styrène-isoprène-styrène, d'un copolymère bloc élastomérique contenant du butadiène, ou de l'éthylène, et d'au moins un élastomère choisi dans le groupe constitué des polybutadiène, polyisoprène et polychloroprène permet d'obtenir une composition pour un adhésif structural qui présente un allongement à la rupture supérieur ou égal à 70%, de préférence 90%, de façon plus préférée 100 %, et une résistance au cisaillement par traction supérieure ou égale à 15, voire à 17 MPa (sur aluminium).

Ce résultat est totalement inattendu, car cet adhésif présente ainsi des propriétés bien supérieures à celles décrites dans l'art. Par ailleurs, cet adhésif présente également une excellente résistance mécanique lorsqu'il est utilisé sur un matériau composite. De fait, il est courant que les résistances mécaniques observées sur métal ne soient pas toujours répétées sur matériau composite.

L'utilisation d'une composition selon l'invention permet donc d'effectuer des collages de métaux, plastiques, matériaux composites sur du composite et trouve ainsi son application notamment dans le domaine de la construction de silos, de bateaux ou de remorques de camions. On peut également l'utiliser dans le domaine de la construction automobile, ou le domaine ferroviaire.

Ainsi, la composition permet l'adhésion d'un matériau sur un autre matériau, l'un ou l'autre matériau étant notamment un métal, un plastique, du bois ou un matériau composite. On peut donc utiliser la composition dans l'une ou l'autre des applications suivantes : adhésion métal / métal, métal / composite, métal / plastique, métal / bois, bois / plastique, bois / composite, bois / bois, plastique / composite, plastique / plastique ou composite / composite.

La composition selon l'invention est ainsi particulièrement intéressante lorsqu'il convient de coller un matériau sur un matériau composite.

Les adhésifs structuraux méthacrylates souples à hautes performances mécaniques obtenus avec la composition selon l'invention sont résilients, résistent aux chocs et aux vibrations. Ils permettent de réaliser des assemblages par collage entre matériaux d'une même nature chimique ou différents par exemple : bétons, bois, céramiques, verres, ferrites, aluminium, aluminium anodisé, acier, acier galvanisé, acier inoxydable, métaux peints, acier, cuivre, zinc, abs, pvc, polyester, acryliques, polystyrène, Gel Coat polyester ou époxydes, matériaux composites, composites renforcés de fibres de verre, stratifiés, nids d'abeilles, et de tout matériau peint ou laqué.

Ils peuvent également combler des jeux importants entre les substrats, d'épaisseurs, de rugosités, de planéités différentes et variables avec une meilleure répartition des contraintes.

La souplesse de cette composition permet ainsi de reprendre les efforts des dilatations différentielles entre les substrats sur des longueurs importantes de plusieurs mètres, en diminuant et en annulant les défauts de géométrie (angle, rugosité, planéité).

Les applications et secteurs d'activités concernés comprennent notamment :

Collage de renforts, rails, charpentes, poutres, raidisseurs, panneaux, cloisons, fixations, supports, éléments de carrosserie, équerres de renfort, inserts, éléments cylindriques et coniques, charnières, cadres, etc. Collage avec reprise de stratification sur cloison, collage avec remplissage nécessitant une tenue mécanique élevée.

Notamment collage de tout élément de structure ou mécanique collés dans la construction navale, automobile, ferroviaire (et infrastructures), aéronautique, aérospatiale, d'équipements électroniques, électromécaniques, d'électroménager, de structures militaires, d'enseignes, de panneaux de signalisation (et publicitaires), de mobiliers urbains, de menuiseries extérieures (fenêtres, baies vitrées, portes-fenêtres, portes d'entrée et de garages), d'éoliennes, containers, d'ouvrages d'art et d'infrastructure (notamment les ponts suspendus, plates-formes pétrolières offshore, aérogares), construction et fixation et de façade d'immeuble et de panneaux solaires.

### Exemples

Les exemples ci-dessous illustrent l'invention sans en restreindre la portée.

### Exemple 1 : matières première utilisées et méthodologie

On utilise les éléments suivants :
monomère ester méthacrylate (a) : méthacrylate de méthyle (MAM)
monomère ester acrylate (e) : méthacrylate de lauryle (LauMA), acrylate de 2-éthylhexyle (AE2H)
copolymère SIS (b) : Kraton D1160 (Kraton Polymers)
copolymère SBS (c) : Kraton D1102 (Kraton Polymers) ou
copolymère SIBS (c) : Kraton MD6455 (Kraton Polymers)
élastomère liquide fonctionnalisé (d) : Hycar® VTB 2000x168 (EPM, USA)
élastomère liquide non-fonctionnalisé (d) : Hycar® CTB 2000x162 (EPM, USA)
monomère acide : acide méthacrylique (AMA)
promoteur d'adhésion : méthacrylate phosphate Genorad 40 (Rahn AG) accélérateur de polymérisation : diméthyl-para-toluidine (DMPT)
agent de rhéologie : Disparlon 6500 (Kusumoto Chemicals)
catalyseur : peroxyde de benzoyle à 20 %.

On effectue les tests selon les protocoles suivants :
On utilise la norme ISO 527 pour effectuer les tests permettant de mesurer la résistance en traction R_{T}, l'allongement à la rupture AR, le module d'élasticité (Module de Young, MY).
L'allongement est observé selon une méthode bien connue de l'homme du métier décrite notamment par la norme ISO 527, la vitesse d'étirement de l'adhésif étant constante et de 50 mm / mn.

La résistance au cisaillement par traction (R_{C}) est mesurée selon la norme ISO 4587. Brièvement, on utilise des éprouvettes en aluminium 2024T3 de dimensions 100 x 25 x 1,6 mm (L x 1 x e). Deux éprouvettes sont collées l'une sur l'autre, la zone de recouvrement étant de 25 x 12 mm (300 mm²), avec une épaisseur du joint de colle d'environ 200 à 400 µm. On mesure ensuite la force nécessaire pour rompre l'adhésion en tirant sur les deux éprouvettes.
La résistance au pelage en T (R_{P}) est évaluée selon la norme ISO 14173. On utilise des éprouvettes en aluminium 100 x 25 x 1,5 mm ou en acier galvanisé 100 x 25 x 0,8 mm que l'on colle avec un recouvrement de 75 x 25 mm et un joint de colle épais d'environ 500 µm.

**Résultats**

| **Echantillon** | **1** | **2** | **3** | **4** | **5** | **6** |
|---|---|---|---|---|---|---|
| MAM | 54 | 54 | 54 | 54 | 54 | 54 |
| Kraton D1102 | 21 | 21 | -- | -- | -- | -- |
| Kraton D1160 | -- | -- | 21 | 21 | -- | -- |
| Kraton MD6455 | -- | -- | -- | -- | 21 | 21 |
| VTB 2000x168 | 10 | 10 | 10 | 10 | 10 | 10 |
| AE2H | 5 | - | 5 | -- | 5 | -- |
| LauMA | -- | 5 | -- | 5 | -- | 5 |
| AMA | 5 | 5 | 5 | 5 | 5 | 5 |
| Genorad 40 | 3 | 3 | 3 | 3 | 3 | 3 |
| DMPT | 1 | 1 | 1 | 1 | 1 | 1 |
| Disparlon 6500 | 1 | 1 | 1 | 1 | 1 | 1 |
| Total (poids) | 100 | 100 | 100 | 100 | 100 | 100 |

Les échantillons testés contiennent le copolymère bloc (b) ou un copolymère bloc (c) selon l'invention avec un élastomère (d).

Les résultats obtenus sont les suivants :

| **Echantillon** | **1** | **2** | **3** | **4** | **5** | **6** |
|---|---|---|---|---|---|---|
| R_{C} (MPa) aluminium | 22 | 19,1 | 21,1 | 18,1 | 20,3 | 21,8 |
| R_{P} (N/mm) aluminium | 12,4 | 13,8 | 20,5 | 12,0 | 16,4 | 11,3 |
| R_{P} (N/mm) acier galvanisé | 8,9 | 12,9 | 17,2 | 17,0 | 10,8 | 16,7 |
| R_{T} (MPa) | 12,4 | 14,0 | 9,4 | 10,2 | 11,5 | 11,3 |
| AR (%) | 43,2 | 53,2 | 50,2 | 50,8 | 88,0 | 66,1 |
| MY (MPa) | 268 | 295,7 | 173,8 | 185,4 | 181,2 | 193,6 |

Ces résultats démontrent que la présence de seulement deux éléments choisis parmi (b), (c) et (d), permet d'obtenir une bonne résistance au cisaillement par traction sur aluminium, mais un allongement à la rupture insuffisant car inférieur à 100 %.

On teste ainsi d'autres composés :

| **Echantillon** | **7** | **8** | **9** | **10** |
|---|---|---|---|---|
| MAM | 54 | 50,2 | 50,2 | 54 |
| Kraton D1102 | 5 | -- | -- | 5 |
| Kraton D1160 | 16 | 16 | 16 | -- |
| Kraton MD6455 | -- | 5 | 5 | 16 |
| VTB 2000x168 | 10 | 10 | 10 | 10 |
| AE2H | 2,5 | 8,8 | 5 | 2,5 |
| LauMA | 2,5 | -- | 3,8 | 2,5 |
| AMA | 5 | 5 | 5 | 5 |
| Genorad 40 | 3 | 3 | 3 | 3 |
| DMPT | 1 | 1 | 1 | 1 |
| Disparlon 6500 | 1 | 1 | 1 | 1 |
| Total (poids) | 100 | 100 | 100 | 100 |

Ces échantillons contiennent un mélange des composés (b), (c) et (d), l'échantillon 10 étant un nouvel échantillon dans lequel le composé (b) est absent.

Les résultats obtenus sont les suivants :

| **Echantillon** | **7** | **8** | **9** | **10** |
|---|---|---|---|---|
| R_{C} (MPa) aluminium | 18,1 | 20,5 | 21,2 | 24,3 |
| R_{P} (N/mm) aluminium | 15,8 | 17,3 | 18,0 | 9,6 |
| R_{P} (N/mm) acier galvanisé | 25,1 | 17,5 | 16,2 | 15,7 |
| R_{T} (MPa) | 10,4 | 9,6 | 10,2 | 10,0 |
| AR (%) | 112,6 | 251,0 | 205,7 | 26,1 |
| MY (MPa) | 182,2 | 95,7 | 143,5 | 166,3 |

Il apparaît clairement que la présence conjointe des éléments (b), (c), (d) permet de maintenir une excellente résistance au cisaillement par traction et d'obtenir un effet inattendu sur l'allongement à la rupture (élasticité), qui devient alors supérieur à 100 %.

On note également que l'on maintient les résultats observés pour la résistance au pelage ou à la traction.

De nouveaux échantillons sont testés :

| **Echantillon** | **7** | **11** | **13** | **8** | **12** | **14** |
|---|---|---|---|---|---|---|
| MAM | 54 | 64 | 55,7 | 50,2 | 60,2 | 55,7 |
| Kraton D1102 | 5 | 5 | 7 | -- | -- | -- |
| Kraton D1160 | 16 | 16 | 23 | 16 | 16 | 23 |
| Kraton MD6455 | -- | -- | -- | 5 | 5 | 7 |
| VTB 2000x168 | 10 | -- | -- | 10 | -- | -- |
| AE2H | 2,5 | 2,5 | 2,2 | 8,8 | 8,8 | 4,3 |
| LauMA | 2,5 | 2,5 | 2,1 | -- | -- | -- |
| AMA | 5 | 5 | 5 | 5 | 5 | 5 |
| Genorad 40 | 3 | 3 | 3 | 3 | 3 | 3 |
| DMPT | 1 | 1 | 1 | 1 | 1 | 1 |
| Disparlon 6500 | 1 | 1 | 1 | 1 | 1 | 1 |
| Total (poids) | 100 | 100 | 100 | 100 | 100 | 100 |

Ces échantillons permettent de confirmer l'importance de la présence du composé (d). Il convient de noter que le composé (d) étant présent à 10 % en poids dans la composition pour les échantillons 7 et 8, ce pourcentage a été réparti en totalité sur le méthacrylate de méthyle (échantillons 11 et 12), ou partiellement sur le monomère et les composés (b) et (c), en maintenant au maximum les proportions initiales (échantillons 13 et 14).

On obtient les résultats suivants :

| **Echantillon** | **7** | **11** | **12** | **8** | **13** | **14** |
|---|---|---|---|---|---|---|
| R_{C} (MPa) aluminium | 18,1 | 18,3 | 16,8 | 20,5 | 24,3 | 16,8 |
| R_{P} (N/mm) aluminium | 15,8 | 7,9 | 4,9 | 17,3 | 12,9 | 5,4 |
| R_{P} (N/mm) acier galvanisé | 25,1 | 11,3 | 6,9 | 17,5 | 14,9 | 8,7 |
| R_{T} (MPa) | 10,4 | 7,7 | 5,8 | 9,6 | 6,4 | 4,1 |
| AR (%) | 112,6 | 7,0 | 31,5 | 251,0 | 12,0 | 49,0 |
| MY (MPa) | 182,2 | 213,7 | 63,0 | 95,7 | 154,2 | 25,4 |

Ces résultats démontrent l'importance de la présence du composé (d) pour obtenir un allongement à la rupture supérieur à 100%.

On teste également d'autres formules :

| **Echantillon** | **A** | **B** | **C** | **D** | **E** |
|---|---|---|---|---|---|
| MAM | 52,2 | 54,2 | 56,2 | 52,2 | 50,2 |
| Kraton D1160 | 16 | 16 | 16 | 16 | 16 |
| Kraton MD6455 | 5 | 5 | 5 | 5 | 5 |
| Hycar VTB 2000x168 | 8 | 6 | 4 | 0 | 5 |
| Hycar CTB 2000x162 | 0 | 0 | 0 | 8 | 5 |
| AE2H | 8,8 | 8,8 | 8,8 | 8,8 | 8,8 |
| AMA | 5 | 5 | 5 | 5 | 5 |
| Genorad 40 | 3 | 3 | 3 | 3 | 3 |
| DMPT | 1 | 1 | 1 | 1 | 1 |
| Disparlon 6500 | 1 | 1 | 1 | 1 | 1 |
| Total (poids) | 100 | 100 | 100 | 100 | 100 |

On obtient les résultats suivants :

| **Echantillon** | **A** | **B** | **C** | **D** | **E** |
|---|---|---|---|---|---|
| R_{C} (MPa) aluminium | 21,2 | 22,6 | 24,0 | 15,6 | 17,3 |
| R_{P} (N/mm) aluminium | 18,0 | 17,0 | 23,6 | 13,5 | 23,6 |
| R_{P} (N/mm) acier galvanisé | 17,7 | 15,8 | 15,0 | 8,5 | 10,0 |
| R_{T} (MPa) | 12,8 | 10,9 | 12,1 | 7,3 | 7,9 |
| AR (%) | 138,7 | 92,9 | 71,1 | 35,3 | 108,0 |
| MY (MPa) | 221,9 | 212,4 | 224,1 | 156,6 | 136,6 |

Adhésion sur matériau composite :
Le test de collage a été effectué par adhésion d'acier galvanisé sur gelcoat polyester.

La qualité d'adhésion est notée selon la convention suivante :
+++ : excellente
++ : bonne
+ : moyen
- : mauvaise

| **Echantillon** | Adhésion acier galvanisé / gelcoat polyester |
|---|---|
| **1** | ++ |
| **2** | ++ |
| **3** | ++ / +++ |
| **4** | ++ / +++ |
| **5** | ++ / +++ |
| **6** | + / ++ |
| **7** | +++ |
| **8** | + / ++ |
| **9** | +++ |
| **10** | + |
| **11** | + / ++ |
| **12** | + |
| **13** | - |
| **14** | - |

On observe que l'adhésion sur matériau composite est très satisfaisante pour les compositions selon l'invention.

## Revendications

1. Composition utilisable dans un adhésif structural, comprenant :
(a) au moins un monomère ester méthacrylate
(b) un copolymère bloc élastomérique contenant du styrène et de l'isoprène, ledit composé étant un copolymère bloc styrène - isoprène - styrène (SIS)
(c) au moins un copolymère bloc élastomérique choisi parmi un copolymère bloc styrène - butadiene - styrène (SBS), un copolymère styrène - isoprene - butadiene -styrène (SIBS), un copolymère bloc styrène - éthylène/butylène - styrène (SEBS) ou un copolymère styrène - éthylène/propylène - styrène (SEPS)
(d) au moins un élastomère choisi dans le groupe constitué des polybutadiène, polyisoprène et polychloroprène.

2. Composition selon la revendication 1, **caractérisée en ce que** ledit un copolymère bloc élastomérique (c) est choisi parmi un copolymère styrène - butadiène - styrène (SBS) et un copolymère styrène - isoprène - butadiène - styrène (SIBS).

3. Composition selon l'une des revendications 1 ou 2, **caractérisée en ce que** ledit élastomère (d) est un polybutadiène fonctionnalisé.

4. Composition selon la revendication 3, **caractérisée en ce que** ledit polybutadiène fonctionnalisé présente des terminaisons vinyliques.

5. Composition selon la revendication 3 ou 4, **caractérisée en ce que** ledit polybutadiène fonctionnalisé est liquide.

6. Composition selon l'une des revendications 1 ou 2, **caractérisée en ce que** ledit élastomère (d) est un mélange d'un polybutadiène fonctionnalisé et d'un polybutadiène non-fonctionnalisé.

7. Composition selon l'une des revendications 1 à 6, **caractérisée en ce qu'**elle comprend entre 4 et 20 % en poids dudit élastomère (d).

8. Composition selon l'une des revendications 1 à 7, **caractérisée en ce qu'**elle comprend entre 15 et 25 % en poids du mélange entre ledit copolymère bloc élastomérique (b) et ledit copolymère bloc élastomérique (c).

9. Composition selon l'une des revendications 1 à 8, **caractérisée en ce qu'**elle comprend également au moins un monomère ester acrylate dans lequel la partie alcool présente au moins une chaîne linéaire d'au moins 6 atomes de carbones (e).

10. Composition selon la revendication 9, **caractérisée en ce que** ledit un monomère ester acrylate (e) est un monomère méthacrylate ou acrylate.

11. Composition selon l'une des revendications 9 ou 10, **caractérisée en ce qu'**elle contient un mélange de deux monomères acrylate (e).

12. Composition selon l'une des revendications 9 à 11, **caractérisée en ce qu'**elle comprend moins de 10 % en poids de monomère acrylate (e).

13. Composition selon l'une des revendications 1 à 12, **caractérisée en ce qu'**elle contient également au moins un composé supplémentaire choisi parmi un accélérateur de polymérisation, un agent de rhéologie, un promoteur d'adhésion, un monomère acide.

14. Utilisation combinée (a) d'au moins un monomère ester méthacrylate, (b) d'un copolymère bloc élastomérique contenant du styrène et de l'isoprène ledit composé étant un copolymère bloc styrène - isoprène - styrène (SIS), (c) d'au moins un copolymère bloc élastomérique choisi parmi un copolymère bloc styrène - butadiene - styrène (SBS), un copolymère styrène - isoprene - butadiene - styrène (SIBS), un copolymère bloc styrène - éthylène/butylène - styrène (SEBS) ou un copolymère styrène - éthylène/propylène - styrène (SEPS) et (d) d'au moins un élastomère choisi dans le groupe constitué des polybutadiène, polyisoprène et polychloroprène pour la préparation d'une composition utilisable en tant qu'adhésif structural présentant un allongement à la rupture supérieur ou égal à 70 % (ISO 527) et une résistance au cisaillement par traction supérieure ou égale à 15 MPa sur aluminium (ISO 4587).

15. Utilisation d'une composition selon l'une des revendications 1 à 13 pour permettre l'adhésion d'un matériau sur un autre matériau.

## Patentansprüche

1. Zusammensetzung, die in einem Strukturklebstoff verwendet werden kann, umfassend:
(a) mindestens ein Methacrylatester-Monomer,
(b) ein elastomeres Blockcopolymer, das Styrol und Isopren enthält, wobei es sich bei der Verbindung um ein Styrol-Isopren-Styrol-Blockcopolymer (SIS-Blockcopolymer) handelt,
(c) mindestens ein elastomeres Blockcopolymer, das aus einem Styrol-Butadien-Styrol-Blockcopolymer (SBS-Blockcopolymer), einem Styrol-Isopren-Butadien-Styrol-Copolymer (SIBS-Copolymer), einem Styrol-Ethylen/Butylen-Styrol-Blockcopolymer (SEBS-Copolymer) oder einem Styrol-Ethylen/Propylen-Styrol-Copolymer (SEPS-Copolymer) ausgewählt ist,
(d) mindestens ein Elastomer, das aus der Gruppe bestehend aus Polybutadien, Polyisopren und Polychloropren derart ausgewählt ist.

2. Zusammensetzung nach Anspruch 1, **dadurch gekennzeichnet, dass** das elastomere Blockcopolymer (c) aus einem Styrol-Butadien-Styrol-Copolymer (SBS-Copolymer) und einem Styrol-Isopren-Butadien-Styrol-Copolymer (SIBS-Copolymer) ausgewählt ist.

3. Zusammensetzung nach Anspruch 1 oder 2, **dadurch gekennzeichnet, dass** es sich bei dem Elastomer (d) um ein funktionalisiertes Polybutadien handelt.

4. Zusammensetzung nach Anspruch 3, **dadurch gekennzeichnet, dass** das funktionalisierte Polybutadien Vinylendgruppen aufweist.

5. Zusammensetzung nach Anspruch 3 oder 4, **dadurch gekennzeichnet, dass** das funktionalisierte Polybutadien flüssig ist.

6. Zusammensetzung nach Anspruch 1 oder 2, **dadurch gekennzeichnet, dass** es sich bei dem Elastomer (d) um eine Mischung aus einem funktionalisierten Polybutadien und einem nichtfunktionalisierten Polybutadien handelt.

7. Zusammensetzung nach einem der Ansprüche 1 bis 6, **dadurch gekennzeichnet, dass** sie zwischen 4 und 20 Gew.-% des Elastomers (d) umfasst.

8. Zusammensetzung nach einem der Ansprüche 1 bis 7, **dadurch gekennzeichnet, dass** sie zwischen 15 und 25 Gew.-% der Mischung aus dem elastomeren Blockcopolymer (b) und dem elastomeren Blockcopolymer (c) umfasst.

9. Zusammensetzung nach einem der Ansprüche 1 bis 8, **dadurch gekennzeichnet, dass** sie außerdem mindestens ein Acrylatester-Monomer (e), in dem der Alkoholteil mindestens eine lineare Kette mit mindestens 6 Kohlenstoffatomen aufweist, umfasst.

10. Zusammensetzung nach Anspruch 9, **dadurch gekennzeichnet, dass** es sich bei dem Acrylatester-Monomer (e) um ein Methacrylat- oder Acrylat-Monomer handelt.

11. Zusammensetzung nach Anspruch 9 oder 10, **dadurch gekennzeichnet, dass** sie eine Mischung der beiden Acrylat-Monomere (e) enthält.

12. Zusammensetzung nach einem der Ansprüche 9 bis 11, **dadurch gekennzeichnet, dass** sie weniger als 10 Gew.-% Acrylat-Monomer (e) umfasst.

13. Zusammensetzung nach einem der Ansprüche 1 bis 12, **dadurch gekennzeichnet, dass** sie außerdem mindestens eine zusätzliche Verbindung, die aus einem Polymerisationsbeschleuniger, einem Rheologiemittel, einem Haftvermittler und einem Säuremonomer ausgewählt ist, enthält.

14. Kombinierte Verwendung von (a) mindestens einem Methacrylatester-Monomer, (b) einem elastomeren Blockcopolymer, das Styrol und Isopren enthält, wobei sich bei der Verbindung um ein Styrol-Isopren-Styrol-Blockcopolymer (SIS-Blockcopolymer) handelt, (c) mindestens einem elastomeren Blockcopolymer, das aus einem Styrol-Butadien-Styrol-Blockcopolymer (SBS-Blockcopolymer), einem Styrol-Isopren-Butadien-Styrol-Copolymer (SIBS-Copolymer), einem Styrol-Ethylen/Butylen-Styrol-Blockcopolymer (SEBS-Copolymer) oder einem Styrol-Ethylen/Propylen-Styrol-Copolymer (SEPS-Copolymer) ausgewählt ist, und (d) mindestens einem Elastomer, das aus der Gruppe bestehend aus Polybutadien, Polyisopren und Polychloropren derart ausgewählt ist, zur Herstellung einer als Strukturklebstoff verwendbaren Zusammensetzung mit einer Reißdehnung größer gleich 70% (ISO 527) und einer Zugscherfestigkeit größer gleich 15 MPa auf Aluminium (ISO 4587).

15. Verwendung einer Zusammensetzung nach einem der Ansprüche 1 bis 13 zum Verkleben eines Materials mit einem zweiten Material.

## Claims

1. Composition that can be used in a structural adhesive, comprising:
(a) at least one methacrylate ester monomer;
(b) an elastomeric block copolymer containing styrene and isoprene, said compound being a styrene-isoprene-styrene block copolymer (SIS);
(c) at least one elastomeric block copolymer selected from a styrene-butadiene-styrene block copolymer (SBS), a styrene-isoprene-butadiene-styrene copolymer (SIBS), a styrene-ethylene/butylene-styrene block copolymer (SEBS) or a styrene-ethylene/propylene-styrene copolymer (SEPS);
(d) at least one elastomer selected from the group consisting of polybutadiene, polyisoprene and polychloroprene.

2. Composition according to Claim 1, **characterized in that** said one elastomeric block copolymer (c) is selected from a styrene-butadiene-styrene copolymer (SBS) and a styrene-isoprene-butadiene-styrene copolymer (SIBS).

3. Composition according to either of Claims 1 and 2, **characterized in that** said elastomer (d) is a functionalized polybutadiene.

4. Composition according to Claim 3, **characterized in that** said functionalized polybutadiene has vinyl end groups.

5. Composition according to Claim 3 or 4, **characterized in that** said functionalized polybutadiene is liquid.

6. Composition according to either of Claims 1 and 2, **characterized in that** said elastomer (d) is a blend of a functionalized polybutadiene and of an unfunctionalized polybutadiene.

7. Composition according to one of Claims 1 to 6, **characterized in that** it comprises between 4% and 20% by weight of said elastomer (d).

8. Composition according to one of Claims 1 to 7, **characterized in that** it comprises between 15% and 25% by weight of the blend between said elastomeric block copolymer (b) and said elastomeric block copolymer (c).

9. Composition according to one of Claims 1 to 8, **characterized in that** it also comprises at least one acrylate ester monomer in which the alcohol part has at least one linear chain of at least 6 carbon atoms (e).

10. Composition according to Claim 9, **characterized in that** said one acrylate ester monomer (e) is a methacrylate or acrylate monomer.

11. Composition according to either of Claims 9 and 10, **characterized in that** it contains a blend of two acrylate monomers (e).

12. Composition according to one of Claims 9 to 11, **characterized in that** it comprises less than 10% by weight of acrylate monomer (e).

13. Composition according to one of Claims 1 to 12, **characterized in that** it also contains at least one additional compound selected from a polymerization accelerator, a rheology modifier, an adhesion promoter and an acid monomer.

14. Combined use (a) of at least one methacrylate ester monomer, (b) of an elastomeric block copolymer containing styrene and isoprene, said compound being a styrene-isoprene-styrene block copolymer (SIS), (c) at least one elastomeric block copolymer selected from a styrene-butadiene-styrene block copolymer (SBS), a styrene-isoprene-butadiene-styrene copolymer (SIBS), a styrene-ethylene/butylene-styrene block copolymer (SEBS) or a styrene-ethylene/propylene-styrene copolymer (SEPS) and (d) at least one elastomer selected from the group consisting of polybutadiene, polyisoprene and polychloroprene for the preparation of a composition that can be used as a structural adhesive having an elongation at break greater than or equal to 70% (ISO 527) and a tensile shear strength greater than or equal to 15 MPa on aluminum (ISO 4587).

15. Use of the composition according to one of Claims 1 to 13 for enabling the adhesion of one material to another material.
